# EUROPÄISCHE PATENTSCHRIFT

(11) **EP 0 866 305 B1**
(45) Veröffentlichungstag und Bekanntmachung des Hinweises auf die Patenterteilung: **02.06.2004**
(21) Anmeldenummer: 98103896.1
(22) Anmeldetag: 05.03.1998
(51) Int. Cl.: G01B 7/00, G01D 5/245

(54) **Verfahren und Vorrichtung zur Umschaltung zwischen verschiedenen Ausgangssignal-Arten einer Positionsmesseinrichtung**
Method and device for switching over between different kinds of output signals of position measuring equipment
Méthode et dispositif pour commuter entre les differentes sortes de signaux de sorties d'un équipement de mesure de position

(30) Priorität: 18.03.1997 DE 19711215
(43) Veröffentlichungstag der Anmeldung: 23.09.1998
(73) Patentinhaber: Dr. Johannes Heidenhain GmbH, 83292 Traunreut (DE)
(72) Erfinder: Bielski, Steffen, Dipl.-Ing., 84518 Garching/Alz (DE); Huber, Helmut, Dipl.-Ing., 84518 Garching/Wald a.d. Alz (DE)

(56) Entgegenhaltungen:
- EP-A- 0 790 489
- DE-A- 3 531 643
- DE-A- 3 942 159
- DE-A- 19 701 310
- DE-C- 19 504 822
- DE-C- 19 513 692
- SU-A- 1 124 363
- US-A- 4 743 901
- US-A- 5 012 436
- US-A- 5 532 582
- PATENT ABSTRACTS OF JAPAN vol. 096, no. 006, 28. Juni 1996 & JP 08 029197 A (MITSUTOYO CORP), 2. Februar 1996

## Beschreibung

Die vorliegende Erfindung betrifft ein Verfahren zur Umschaltung zwischen verschiedenen Ausgangssignal-Arten einer Positionsmeßeinrichtung nach dem Oberbegriff des Anspruches 1 sowie eine Vorrichtung zur Umschaltung zwischen verschiedenen Ausgangssignal-Arten einer Positionsmeßeinrichtung nach dem Oberbegriff des Anspruches 12.

Eine erste Kategorie bekannter inkrementaler Positionsmeßeinrichtungen ist so ausgelegt, daß sie die bei der Abtastung einer periodischen Maßstabteilung erzeugten analogen Abtastsignale an eine nachgeordnete Auswerteeinheit übertragen. Daneben sind weitere Kategorien inkrementaler Positionsmeßeinrichtungen bekannt, bei denen bereits auf Seiten der Positionsmeßeinrichtung eine Digitalisierung der analogen Abtastsignale erfolgt und die digitalisierten Signale in Rechteckform an die nachgeordnete Auswerteeinrichtung übertragen werden. Bei den bereits digitalisierten Signalen kann es sich etwa um TTL- oder aber um HTL-Signale handeln, d.h. die Spannungspegel dieser Signale sind unterschiedlich. Die gewählte Art der Signalübertragung und damit der entsprechenden Positionsmeßeinrichtung hängt jeweils von den Anforderungen der Auswerteeinheit ab.
Bei den bislang bekannten Positionsmeßeinrichtungen ist in der Regel lediglich eine Übertragung von analogen oder digitalisierten Ausgangssignalen einer bestimmten Art möglich, d.h. die Übertragung nur einer der verschiedenen erwähnten Ausgangssignal-Arten. Aus mehreren Gründen würde sich jedoch als günstig erweisen, wenn verschiedene Ausgangssignal-Arten bei einer inkrementalen Positionsmeßeinrichtung auf Seiten der Auswerteeinheit wahlweise zur Verfügung stehen würden.
So ergeben sich etwa im Fall der bloßen Übertragung von digitalisierten Ausgangssignalen in TTL- oder HTL-Form mitunter Schwierigkeiten, wenn die ausgegebenen Rechtecksignale bezüglich der Qualität der analogen Abtastsignale überprüft werden sollen. Treten beispielsweise im Meßbetrieb Probleme seitens der Abtasteinheit einer derartigen Positionsmeßeinrichtung auf, so äußert sich dies in der Auswerteeinheit nur durch den Ausfall der übertragenen Signale. Eine weitergehendere Fehleranalyse ist nur unmittelbar an der Abtasteinheit möglich.
Die Notwendigkeit der Überwachung der erzeugten analogen Abtastsignale ergibt sich desweiteren bei der Justage einer derartigen Positionsmeßeinrichtung bzw. beim gegebenenfalls erforderlichen Abgleich eines derartigen Meßsystems. Wenn ausgangsseitig lediglich rechteckförmige Signale zur Verfügung stehen, müssen zu diesem Zweck auf Seiten der Abtasteinheit die analogen Abtastsignale erfaßt werden. Dies wiederum erfordert bestimmte Eingriffe auf Seiten der Abtasteinheit, insbesondere ein Öffnen derselben.

Aus diesen Gründen ist beispielsweise in der japanischen Offenlegungsschrift JP 08-029197 vorgeschlagen worden, in einer inkrementalen Positionsmeßeinrichtung wahlweise eine definierte Ausgangssignal-Art einstellen zu können. Hierbei ist neben der Übertragung von Rechtecksignalen auch die Übertragung der analogen Abtastsignale vorgesehen. Die Umschaltung zwischen den beiden verschiedenen Ausgangssignal-Arten erfolgt über ein von der Auswerteeinheit geliefertes Umschaltsignal, welches auf einer separaten Verbindungsleitung übertragen wird. Nachteilig an dieser vorgeschlagenen Variante einer Positionsmeßeinrichtung ist nunmehr, daß eine separate Verbindungsleitung für die Übertragung des Umschaltsignals erforderlich ist.

Auch die EP 0 790 489 A1, bei der es sich um einen Stand der Technik nach Artikel 54 (3) EPÜ handelt, beschreibt ein Verfahren zur Umschaltung zwischen verschiedenen Ausgangssignalarten einer Positionsmesseinrichtung. Für die Übertragung des Umschaltsignals wird hier eine Taktleitung genutzt, über die auch die Synchronisation der Datenübertragung zwischen der Positionsmesseinrichtung und einer Verarbeitungseinheit gesteuert wird.

Eine weitere Variante beschreibt die DE 195 13 692 C1. Hier wird ebenfalls eine Möglichkeit zur Umschaltung zwischen verschiedenen Signalarten vorgeschlagen, die von einem Positionsmessgerät zu einer Verarbeitungseinheit übertragen werden. Bei den Signalen handelt es sich zum einen um ein Sinus-Cosinus-Signalpaar mit maximal einer Periode je Polpaar eines Elektromotors, das zur Grobbestimmung der Winkelposition der Motorwelle für das Anlaufen des Elektromotors dient, zum andern um ein Sinus-Cosinus-Signalpaar mit einer hohen Anzahl von Perioden je Umdrehung, die der Teilungszähl einer Inkrementalspur entsprechen. Für die Umschaltung wird ein separater digitaler Parameterkanal verwendet, über den auch ein Referenz-Winkel-Signal vom Positionsmessgerät zur Verarbeitungseinheit übertragen wird. Aus diesem Grund muss der digitale Parameterkanal bidirektional ausgeführt und die Möglichkeit der Datenkollision berücksichtigt werden. Dafür ist ein beträchtlicher schaltungstechnischer Aufwand erforderlich.

Bei einer ggf. möglichen, wahlweisen Ausgabe von Rechtecksignalen in TTLoder HTL-Form wäre desweiteren eine Reduzierung unterschiedlicher Bauformen von Positionsmeßeinrichtungen möglich. Auch in diesem Fall ist eine möglichst minimale Anzahl von Verbindungsleitungen zwischen der Positionsmeßeinrichtung und der Auswerteeinheit wünschenswert.

Aufgabe der vorliegenden Erfindung ist es daher, ein Verfahren sowie eine Vorrichtung zur Umschaltung zwischen verschiedenen Ausgangssignal-Arten einer Positionsmeßeinrichtung zu schaffen, wobei keine separate Verbindungsleitung zur Übertragung des Umschaltsignales erforderlich ist.

Diese Aufgabe wird gelöst durch ein Verfahren mit den Merkmalen im kennzeichnenden Teil des Anspruches 1 sowie durch eine Vorrichtung mit den Merkmalen im kennzeichnenden Teil des Anspruches 12.

Vorteilhafte Ausführungsformen des erfindungsgemäßen Verfahrens bzw. der erfindungsgemäßen Vorrichtung ergeben sich aus den Maßnahmen, die in den jeweiligen abhängigen Ansprüchen aufgeführt sind.

Erfindungsgemäß wird nunmehr mit der bereits vorhandenen Versorgungsleitung eine Verbindung zwischen der Positionsmeßeinrichtung und der Auswerteeinheit zur Übertragung des Umschaltsignales verwendet, das heißt es ist keine separate Leitung erforderlich. Es reduziert sich somit der entsprechende Aufwand bzw. eine andernfalls erforderliche Umrüstung in Bezug auf die Zahl der Verbindungsleitungen.

Bei einer vorteilhaften Ausführungsform der erfindungsgemäßen Vorrichtung bzw. des erfindungsgemäßen Verfahrens ist beispielsweise vorgesehen auf die Versorgungsleitung ein Umschaltsignal mit einer definierten Dauer und/oder einer definierten Frequenz aufzumodulieren, das auf Seiten der Positionsmeßeinrichtung identifiziert wird. Für die verschiedenen Ausgangssignal-Arten stehen dann beispielsweise unterschiedliche Umschaltsignale zur Verfügung. Anhand eines derartigen Signales kann die Umschaltung zwischen den verschiedenen vorgesehenen Ausgangssignal-Arten erfolgen.

Alternativ ist auch möglich, daß im Fall einer gewünschten Umschaltung zwischen verschiedenen Pegeln der rechteckförmigen Ausgangssignale, z.B. zwischen HTL- und TTL-Signalen, als Umschaltsignal unterschiedliche Pegel der Gleichspannungsversorgung herangezogen werden. Je nach erfaßtem bzw. detektiertem Pegel der anliegenden Versorgungsspannung werden Ausgangssignale in Rechteckform mit unterschiedlichen Signalpegeln an die Auswerteeinheit übertragen. In einer derartigen Ausführungsform der erfindungsgemäßen Vorrichtung muß die Positionsmeßeinrichtung lediglich dahingehend ausgelegt sein, daß sie mit unterschiedlichen Versorgungsspannungen betreibbar ist.

Als weiterer Vorteil der erfindungsgemäßen Maßnahmen ist aufzuführen, daß auf diese Art und Weise die Anzahl verschiedener Bauformen von Positionsmeßeinrichtungen reduziert werden kann, da je nach Anforderung die erforderliche Ausgangssignal-Art bei der gleichen Positionsmeßeinrichtung gewählt werden kann.

Die erfindungsgemäße Vorrichtung bzw. das erfindungsgemäße Verfahren können selbstverständlich in Verbindung mit verschiedensten Meßsystemen eingesetzt werden.

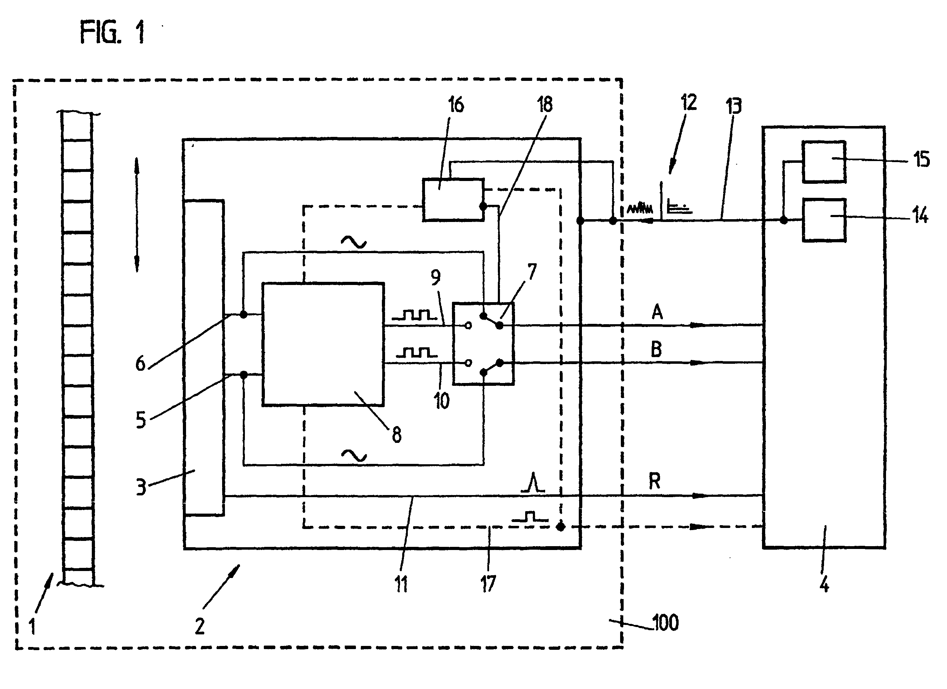

Weitere Vorteile sowie Einzelheiten der erfindungsgemäßen Vorrichtung bzw. des erfindungsgemäßen Verfahrens ergeben sich aus der nachfolgenden Beschreibung eines Ausführungsbeispiels anhand der beiliegenden Zeichnung. Diese zeigt eine Blockschaltbild-Darstellung eines Ausführungsbeispieles der erfindungsgemäßen Vorrichtung.

Die dargestellte inkrementale Positionsmeßeinrichtung 100 des Ausführungsbeispieles umfaßt eine Maßstabteilung 1 sowie eine relativ dazu bewegliche Abtasteinheit 2. Bei der Relativbewegung von Maßstabteilung 1 und Abtasteinheit 2 werden in der Signalerzeugungseinheit 3 periodisch modulierte, analoge Abtastsignale erzeugt, die zur Positionsbestimmung in einer nachgeordneten Auswerteeinheit 4 weiterverarbeitet werden können. Die Signalerzeugungseinheit 3 liefert vorzugsweise mindestens zwei um 90° phasenversetzte analoge Ausgangssignale 5, 6, die neben der Bestimmung der Relativposition von Maßstabteilung 1 und Abtasteinheit 2 auch eine Richtungsdiskriminierung in bekannter Art und Weise ermöglichen.
Die Maßstabteilung 1 und die Abtasteinheit 2 der Positionsmeßeinrichtung 100 sind beispielsweise mit zueinander beweglichen Teilen einer Werkzeugmaschine verbunden, deren Relativposition zueinander bestimmt werden soll. Als Auswerteeinheit 4 fungiert eine bekannte numerische Werkzeugmaschinensteuerung.
Die inkrementale Positionsmeßeinrichtung 100 kann hierbei in verschiedensten Formen ausgebildet sein. So ist die Erzeugung der analogen Abtastsignale sowohl optisch als auch magnetisch, induktiv oder kapazitiv möglich. Je nach dem physikalischen Abtastprinzip ist auch die Maßstabteilung 1 sowie die Signalerzeugungs-Einheit 3 unterschiedlich ausgebildet. Beispielsweise wäre im Fall einer magnetischen Positionsmeßeinrichtung eine alternierend magnetisierte Maßstabteilung 1 vorgesehen; die entsprechende Signalerzeugungseinheit 3 umfaßt dann u.a. magnetfeldempfindliche Elemente wie z.B. Hall-Elemente oder magnetoresistive Elemente, die im Fall der Relativbewegung periodisch modulierte, analoge Abtastsignale liefern. Bei einer optischen Positionsmeßeinrichtung kann hingegen eine reflektierend ausgebildete Maßstabteilung 1 mit alternierend reflektierenden und nicht-reflektierenden Bereichen vorgesehen werden. Seitens der Signalerzeugungseinheit 3 wiederum sind ein oder mehrere Lichtquellen sowie optoelektronische Detektorelemente zur Erfassung der von der Maßstabteilung reflektierten Strahlenbündel angeordnet usw..

Neben dem schematisiert dargestellten Ausführungsbeispiel zur Erfassung von linearen Bewegungen können selbstverständlich auch rotatorische Meßsysteme erfindungsgemäß ausgestaltet werden.

Die von der Signalerzeugungseinheit 3 gelieferten, um 90° phasenversetzten analogen Abtastsignale 5, 6 werden seitens der Abtasteinheit 2 nunmehr zum einen unmittelbar nach dem Ausgang der Signalerzeugungseinheit 3 abgegriffen und gelangen auf Eingänge einer Schalteinheit 7. An weiteren Eingängen der Schalteinheit 7 liegen desweiteren auch die über eine Digitalisierungseinheit 8 digitalisierten Abtastsignale 9, 10 an. Die Digitalisierungseinheit 8 ist dabei in bekannter Art und Weise ausgebildet und umfaßt zur Umwandlung der analogen Abtastsignale 5, 6 entsprechende Komparatoren und sonstige Bauelemente, die in der Zeichnung aus Übersichtlichkeitsgründen nicht dargestellt sind.

In einer weiteren Ausführungsform ist die Digitalisierungseinheit 8 derart ausgebildet, daß je nach anliegender Versorgungsspannung digitalisierte Ausgangssignale mit unterschiedlichen Signalpegeln damit erzeugbar sind. Die Digitalisierungseinheit 8 liefert demzufolge in Abhängigkeit der Höhe der anliegenden Versorgungsspannung Ausgangssignale in TTL- oder HTL-Form, zwischen denen über die nachfolgend zu erläuternden Maßnahmen definiert umgeschaltet werden kann.

Im dargestellten Ausführungsbeispiel der Figur liegen mit den analogen Abtastsignalen 5, 6 und den digitalisierten Abtastsignalen 9, 10 zumindest zwei unterschiedliche Ausgangssignal-Arten an den Eingängen der Schalteinheit 7 an. Über die Schalteinheit 7 ist es möglich, zwischen mindestens zwei verschiedenen Ausgangssignal-Arten, die an die Auswerteeinheit 4 übergeben werden sollen. Die Ausgänge der Schalteinheit 7 sind zu diesem Zweck mit den mindestens zwei Signalübertragungsleitungen A, B zwischen der Abtasteinheit 2 und der Auswerteeinheit 4 verbunden, über die die Ausgangssignale 5, 6, 9, 10 in Richtung der Auswerteeinheit 4 zur Weiterverarbeitung übertragen werden. Hierbei ist neben der Übertragung der um 90° phasenversetzten analogen Abtastsignale 5, 6 oder der entsprechenden Übertragung der phasenversetzten digitalisierten Abtastsignale 9, 10 desweiteren auch möglich, auf einer der mindestens zwei Signalübertragungsleitungen A digitalisierte Abtastsignale zu übertragen, während auf der zweiten Signalübertragungsleitung B ein Signal bezüglich der Bewegungsrichtung übertragen wird, das über die Digitalisierungseinheit 8 erzeugbar ist.

Eine weitere Signalübertragungsleitung R zwischen der Abtasteinheit 2 und der Auswerteeinheit 4 ist im dargestellten Ausführungsbeispiel desweiteren vorgesehen, um ein Referenzimpuls-Signal 11 zu übertragen, das ebenfalls über die Signalerzeugungseinheit 3 generiert wird. Bezüglich der erfindungswesentlichen Maßnahmen spielt die Übertragung des Referenzimpulssignales 11 jedoch keine weitere Rolle.

In der schematisierten Darstellung sind die Signal-Übertragungsleitungen A, B, R der Übersichtlichkeit halber lediglich einfach eingezeichnet worden. Selbstverständlich ist es aber auch möglich, zur Übertragung der verschiedenen Positionsdaten auf den unterschiedlichen Signal-Übertragungsleitungen A, B, R neben der jeweiligen Übertragung der analogen oder bereits digitalisierten Abtastsignale 5,6, 9, 10 und des Referenzimpulssignales 11 auch die Übertragung der entsprechend invertierten Signale vorzusehen; in diesem Fall verdoppelt sich die erforderliche Anzahl an Signal-Übertragungsleitungen. Bezüglich der erfindungswesentlichen Maßnahmen spielt dies jedoch ebenfalls keine weitere Rolle.

Um nunmehr die gewünschte Umschaltung zwischen den verschiedenen, zur Verfügung stehenden Ausgangssignal-Arten auf den Signal-Übertragungsleitungen A, B vorzunehmen, erfolgt die Übertragung eines Umschaltsignales 12 zwischen Auswerteeinheit 2 und Positionsmeßeinrichtung 100 auf einer Versorgungsleitung 13. Über die Versorgungsleitung 13 erfolgt ansonsten die Strom- bzw. Spannungsversorgung der Positionsmeßeinrichtung 100 d.h. insbesondere der Signalerzeugungseinheit 3 und der nachgeordneten, verschiedenen Bauelemente. Im Fall einer üblichen Gleichspannungsversorgung der Abtasteinheit 2 sind hierzu in der Regel zwei Versorgungsleitungen erforderlich, während in der Figur aus Übersichtlichkeitsgründen wiederum nur eine der Versorgungsleitungen 13 eingezeichnet ist. Auf Seiten der Auswerteeinheit 4 ist zur Strom- und Spannungsversorgung der Abtasteinheit 2 eine entsprechende Strom- und Spannungsversorgungseinheit 14 angeordnet.

Bezüglich des übertragenen Umschaltsignales 12 existieren nunmehr in Abhängigkeit der verschiedenen Ausgangssignal-Arten mehrere Varianten. So ist in einer möglichen Ausführungsform zur Erzeugung eines Umschaltsignales 12 auf mindestens einer Versorgungsleitung 13 seitens der Auswerteeinheit 4 eine Umschaltsignal-Erzeugungseinheit 15 vorgesehen. Über diese können ein oder mehrere definierte Umschaltsignale 12 auf die Versorgungsleitung 13 aufmoduliert werden. Verschiedene Umschaltsignale können dabei durch unterschiedliche Dauer und/oder unterschiedliche Frequenzen gekennzeichnet sein, so daß etwa für jede zur Verfügung stehende Ausgangssignal-Art ein definiertes Umschaltsignal 12 parat gehalten werden kann.
Beispielsweise kann ein Umschaltsignal 12 auch verschiedene separate Teilsignale bestimmter Dauer und Frequenz umfassen, z.B. kann ein Umschaltsignal 12 aus einem ersten Teilsignal U_{TS1} (Frequenz f1; Dauer t1), einem zweiten Teilsignal U_{TS2} (Frequenz f2; Dauer t2) sowie einem dritten Teilsignal U_{TS3} (Frequenz f3; Dauer t3) bestehen. Die Umschaltsignal-Erzeugungseinheit 15 weist bei derartigen verwendeten Umschaltsignalen 12 u.a. auch einen - nicht dargestellten - Frequenzgenerator auf, über den die verschiedenen Teilsignale mit definierter Frequenz und Dauer erzeugbar sind.

Selbstverständlich kann ein Umschaltsignal 12, das auf mindestens einer Versorgungsleitung 13 übertragen wird, auch eine andere Form aufweisen, d.h. die vorliegende Erfindung ist keineswegs auf die vorab erläuterte Variante der Erzeugung eines Umschaltsignales 12 beschränkt zu sehen. Beispielsweise kann wie bereits vorab angedeutet, als Umschaltsignal 12 ein unterschiedlicher Pegel der Versorgungsspannung genutzt werden. Je nach Höhe der anliegenden Versorgungsspannung werden in der Digitalisierungseinheit 8 digitalisierte Ausgangssignale mit unterschiedlichen Signalpegeln erzeugt, beispielsweise TTL- oder HTL-Signale. Dementsprechend kann über die Umschaltsignal-Erzeugungseinheit 15 auf die Strom- und Spannungsversorgungseinheit 14 eingewirkt werden, um ggf. die Höhe der Versorgungsspannung zu verändern.

Zur Detektion bzw. Identifizierung des jeweiligen Umschaltsignales 12 auf Seiten der Positionsmeßeinrichtung 100 ist dort eine entsprechende Identifikationseinheit 16 angeordnet, die eventuell auf der Versorgungsleitung 13 übertragene Umschaltsignale 12 identifiziert und in der Abtasteinheit 2 eine Umschaltung der gerade aktivierten Ausgangssignal-Art in eine andere Ausgangssignal-Art bewirkt. Beispielsweise wird im Fall eines aufmodulierten Umschaltsignales mittels der Identifikationseinheit 16 eine Entkopplung dieses Signales 12 von der Versorgungsleitung 13 über eine entsprechende Demodulation vorgenommen. Nach der Identifikation eines entsprechenden Umschaltsignales 12 von der Identifikationseinheit 16 ein entsprechendes Schaltsignal 18 erzeugt und an die Schalteinheit 7 übergeben. Über die Schalteinheit 7 wird dann beispielsweise von der Ausgabe von analogen Abtastsignalen 5, 6 auf die Ausgabe digitalisierter Ausgangssignale 9, 10 umgeschaltet, wie dies vorab schon erläutert wurde.

In einer möglichen Ausgestaltung der erfindungsgemäßen Vorrichtung bzw. des erfindungsgemäßen Verfahrens kann nach der erfolgten Umschaltung eine weitere Maßnahme vorgesehen werden. So ist in der Figur in strichlinierter Form eine weitere Verbindungsleitung 17 zwischen der Auswerteeinheit 4 und der Abtasteinheit 2 bzw. der Digitalisierungseinheit 8 eingezeichnet. Eine derartige Verbindungsleitung 17 ist in der Regel bei Positionsmeßeinrichtungen vorhanden, die normalerweise nur digitalisierte Ausgangssignale liefern. Im Fall eines auftretenden Fehlers in der Signal-Erzeugungseinheit 3, z.B. beim Ausfall einer Lichtquelle, wird über diese Verbindungsleitung 17 ein Fehlersignal an die Auswerteeinheit 4 übergeben. Der ordnungsgemäße Systemzustand wird dabei in der Regel auf dieser Verbindungsleitung 17 über logisch "LOW" gekennzeichnet, während der Fehlerfall mit logisch "HIGH" identifiziert wird. Auf der Verbindungsleitung 17 wird nach der erfolgten Umschaltung zwischen bestimmten Ausgangssignal-Arten von der Positionsmeßeinrichtung 100 ein Bestätigungssignal an die Auswerteeinheit 4 übergeben, anhand dessen die Auswerteeinheit 4 erkennt, daß die gewünschte Umschaltung erfolgt ist und nunmehr Daten auf den Signal-Übertragungsleitungen A, B in einer anderen Form übertragen werden.

Die konkrete Ausführungsform der Identifikationseinheit 16 auf Seiten der Positionsmeßeinrichtung 100 hängt selbstverständlich davon ab, in welcher Form ein Umschaltsignal 12 auf der Versorgungsleitung 13 übertragen wird sowie davon, welche bzw. wieviele Ausgangssignal-Arten überhaupt zur Verfügung stehen. Im Fall der Übertragung eines Umschaltsignales 12 in der oben erläuterteten Form, d.h. bestehend aus mehreren Teilsignalen unterschiedlicher Frequenz, muß die Identifikationseinheit 16 in der Lage sein, dieses Umschaltsignal 12 von der Versorgungsleitung 13 zu entkoppeln und mit einer vorgegebenen Umschaltsignalform zu vergleichen. Im Fall der Übereinstimmung mit der vorgegebenen Umschaltsignalform wird das entsprechende Schaltsignal 18 für die Schalteinheit 7 erzeugt, um die Positionsmeßeinrichtung 100 in die jeweils gewünschte Ausgangssignal-Art umzuschalten.
Ist hingegen lediglich eine Umschaltungsmöglichkeit zwischen verschiedenen digitalisierten Rechtecksignalformen, etwa TTL- oder HTL-Pegel, vorgesehen, so kann die Identifikationseinheit 16 in die Digitalisierungseinheit 8 integriert werden. Je nach anliegender Höhe der Versorgungsspannung wird von der Digitalisierungeinheit 8 dann die entsprechende Ausgangssignal-Art erzeugt. Andernfalls sei über die strichlinierte Verbindung zwischen der Identifikationseinheit 16 und der Digitalisierungseinheit 8 angedeutet, daß im Fall unterschiedlicher Pegel der rechteckförmigen Abtastsignale beim Detektieren eines anderen Versorgungsspannungspegels ein entsprechendes Signal an die Digitalisierungseinheit 8 übertragen wird, um eine Ausgabe unterschiedlicher Rechtecksignale zu bewirken.

Wenn wie im Ausführungsbeispiel beschriebenen Fall lediglich zwei Ausgangssignat-Arten vorgesehen sind, kann in einer möglichen Variante für jede der beiden Ausgangssignal-Arten ein jeweils definiertes Umschaltsignal 12 vorgesehen werden, das über die Umschaltsignal-Erzeugungseinheit 14 auf Seiten der Auswerteeinheit 4 erzeugbar ist und über die Identifikationseinheit 16 erkennbar sein muß. Entsprechend können selbstverständlich im Fall mehrerer vorgesehener Ausgangssignal-Arten für jede einzelne Ausgangssignal-Art unterschiedliche Umschaltsignale 12 auf der Versorgungsleitung 13 übertragen werden; bei der Detektion des jeweiligen Umschaltsignales 12 erfolgt dann die Umschaltung in die von der Auswerteeinheit 4 angeforderte Ausgangssignal-Art.

Daneben ist es aber insbesondere im Fall lediglich zweier vorhandener Ausgangssignal-Arten ebenso möglich, lediglich ein einziges Umschaltsignal 12 vorzusehen und über die Versorgungsleitung 13 zur Positionsmeßeinrichtung 100 zu übertragen, wenn eine Umschaltung von einer Ausgangssignal-Art in eine andere Ausgangssignal-Art gewünscht wird. Sobald das Umschaltsignal 12 über die Identifikationseinheit 16 erkannt wird, erfolgt die Umschaltung in die jeweils andere Ausgangssignal-Art usw.. Grundsätzlich kann auch im Fall von mehr als zwei vorgesehenen Ausgangssignal-Arten lediglich ein Umschaltsignal 12 vorgesehen werden, wenn eine bestimmte Umschalt-Reihenfolge vorgegeben wird.
Im Fall lediglich eines einzigen Umschaltsignales 12 kann insbesondere die Identifikationseinheit 16 auf Seiten der Positionsmeßeinrichtung 100 relativ einfach ausgebildet werden. So kann beispielsweise bei der gewünschten Umschaltung zwischen digitalisierten Abtastsignalen in TTL- oder HTL-Form über den Pegel der anliegenden Versorgungsspannung eine Zener-Diode als Identifikationseinheit 16 verwendet werden, über die der Strom als Schaltsignal erfaßt wird.

Bezüglich der konkreten Ausgestaltung der verschiedenen, erläuterteten Komponenten auf Seiten der Auswerteeinheit 4 als auch auf Seiten der Positionsmeßeinrichtung 100 existieren demzufolge vielfältige Möglichkeiten, wie die entsprechenden Funktionen in Software- oder Hardware-Form realisiert werden können. Die vorhergehende Beschreibung ist demzufolge nicht einschränkend zu verstehen, sondern es sollten darüber primär die Funktonen sowie das erfindungsgemäße Zusammenwirken verschiedener Einheiten erläutert werden.

## Patentansprüche

1. Verfahren zur Umschaltung zwischen verschiedenen Ausgangssignal-Arten einer Positionsmeßeinrichtung (100), wobei über die Positionsmeßeinrichtung (100) mindestens zwei verschiedene Ausgangssignal-Arten erzeugt werden können, die auf Signal-Übertragungsleitungen (A,B) zu einer Auswerteeinheit (4) übertragen werden und die Umschaltung zwischen den verschiedenen Ausgangssignal-Arten über ein oder mehrere von Seiten der Auswerteeinheit (4) übertragene Umschaltsignale (12) erfolgt,
**dadurch gekennzeichnet, daß** die Übertragung des mindestens einen Umschaltsignales (12) auf einer Versorgungsleitung (13) erfolgt, über die die Positionsmeßeinrichtung (100) mit einer Strom- und Spannungsversorgungseinheit (14) verbunden ist, die auf Seiten der Auswerteeinheit (4) angeordnet ist und Über die die Gleichstrom- und Gleichspannungsversorgung der Positionsmeßeinrichtung (100) erfolgt.

2. Verfahren nach Anspruch 1, **dadurch gekennzeichnet, daß** als eine erste Ausgangssignal-Art analoge Abtastsignale (5, 6) übertragen werden und als eine zweite Ausgangssignal-Art bereits digitalisierte Abtastsignale (9, 10) in Rechteckform übertragen werden.

3. Verfahren nach Anspruch 1, **dadurch gekennzeichnet, daß** auf Seiten der Auswerteeinheit (4) auf mindestens einer Versorgungsleitung (13) ein Umschaltsignal (12) mit einer definierten Dauer und/oder einer definierten Frequenz aufmoduliert wird.

4. Verfahren nach Anspruch 3, **dadurch gekennzeichnet, daß** auf Seiten der Positionsmeßeinrichtung eine Identifizierung des Umschaltsignales (12) über eine Identifikations-Einheit (16) erfolgt, die entsprechend dem identifizierten Umschaltsignal (12) von der Auswerteeinheit (4) ein Schaltsignal (18) zur Umschaltung der übertragenen Ausgangssignal-Art erzeugt.

5. Verfahren nach Anspruch 4, **dadurch gekennzeichnet, daß** das Schaltsignal (18) einer Schalteinheit (7) in der Positionsmeßeinrichtung (100) zugeführt wird, über die eine Umschaltung zwischen den verschiedenen Ausgangssignal-Arten möglich ist.

6. Verfahren nach Anspruch 1, **dadurch gekennzeichnet, daß** mehrere verschiedene Umschaltsignale (12) übertragbar sind, von denen jedes einer bestimmten Ausgangssignal-Art entspricht.

7. Verfahren nach Anspruch 1, **dadurch gekennzeichnet, daß** ein definiertes Umschaltsignal (12) übertragbar ist, über das wechselweise zwischen zwei verschiedenen Ausgangssignal-Arten umschaltbar ist.

8. Verfahren nach Anspruch 1, **dadurch gekennzeichnet, daß** die unterschiedlichen Ausgangssignal-Arten jeweils auf den selben Signal-Übertragungsleitungen (A, B) von der Positionsmeßeinrichtung (100) zur Auswerteeinheit (4) übertragen werden.

9. Verfahren nach Anspruch 1, **dadurch gekennzeichnet, daß** mit dem erfolgten Umschalten zwischen verschiedenen Ausgangssignal-Arten ein Bestätigungssignal von der Positionsmeßeinrichtung an die Auswerteeinheit (4) gesandt wird, anhand dessen die Auswerteeinheit (4) den erfolgten Umschaltvorgang erkennt.

10. Verfahren nach Anspruch 1, **dadurch gekennzeichnet, daß** als unterschiedliche Ausgangssignal-Arten mindestens zwei Arten digitalisierter Abtastsignale mit unterschiedlichen Signalpegeln übertragbar sind.

11. Verfahren nach Anspruch 10, **dadurch gekennzeichnet, daß** als Umschaltsignal unterschiedliche Pegel der Versorgungsspannung dienen.

12. Vorrichtung zur Umschaltung zwischen verschiedenen Ausgangssignal-Arten einer Positionsmeßeinrichtung (100), wobei über die Positionsmeßeinrichtung (100) mindestens zwei verschiedene Ausgangssignal-Arten erzeugbar sind, die auf Signal-Übertragungsleitungen (A,B) zu einer Auswerteeinheit (4) übertragen werden und die Umschaltung zwischen den verschiedenen Ausgangssignal-Arten über ein oder mehrere von der Auswerteeinheit (4) übertragene Umschaltsignale (12) erfolgt, **dadurch gekennzeichnet, daß** die Positionsmeßeinrichtung (100) als auch die Auswerteeinheit (4) derart ausgebildet sind, daß eine Übertragung des mindestens einen Umschaltsignales (12) auf der Versorgungsleitung (13) der Positionsmeßeinrichtung (100) möglich ist, wozu die Positionsmeßeinrichtung (100) mit einer Strom- und Spannungsversorgungseinheit (14) verbunden ist, die auf Seiten der Auswerteeinheit (4) angeordnet ist und über die die Gleichstrom- und Gleichspannungsversorgung der Positionsmeßeinrichtung (100) erfolgt.

13. Vorrichtung nach Anspruch 12, **dadurch gekennzeichnet, daß** die Positionsmeßeinrichtung (100) eine Digitalisierungseinheit (8) umfaßt, über die aus den analogen Ausgangssignalen (5, 6) auch digitalisierte Ausgangssignale (9, 10) in Rechteckform erzeugbar sind.

14. Vorrichtung nach Anspruch 12, **dadurch gekennzeichnet, daß** auf Seiten der Auswerteeinheit (4) eine Umschaltsignal-Erzeugungseinheit (15) angeordnet ist, über die auf mindestens eine Versorgungsleitung (13) ein Umschaltsignal (12) mit einer definierten Dauer und/oder einer definierten Frequenz aufmodulierbar ist.

15. Vorrichtung nach Anspruch 14, **dadurch gekennzeichnet, daß** die Umschaltsignal-Erzeugungseinheit (15) einen Frequenzgenerator umfaßt.

16. Vorrichtung nach Anspruch 14, **dadurch gekennzeichnet, daß** auf Seiten der Positionsmeßeinrichtung (100) eine tdentifikations-Einheit (16) zur Identifizierung des Umschaltsignales (12) angeordnet ist, die entsprechend dem identifizierten Umschaltsignal (12) ein Schaltsignal (18) zur Umschaltung der übertragenen Ausgangssignal-Art erzeugt.

17. Vorrichtung nach Anspruch 16, **dadurch gekennzeichnet, daß** auf Seiten der Positionsmeßeinrichtung (100) eine Schalteinheit (7) angeordnet ist, der das erzeugte Schaltsignal (18) zugeführt wird, über das eine Umschaltung zwischen den verschiedenen Ausgangssignal-Arten möglich ist.

18. Vorrichtung nach Anspruch 13, **dadurch gekennzeichnet, daß** die auf Seiten der Positionsmeßeinrichtung (100) angeordnete Digitalisierungseinheit (8) derart ausgebildet ist, daß damit in Abhängigkeit des anliegenden Versorgungsspannungspegels als Umschaltsignal (12) digitalisierte Abtastsignale mit unterschiedlichen Signalpegeln erzeugbar sind.

## Claims

1. A method of switching between different kinds of output signal of a position measuring device (100), wherein at least two different kinds of output signal are generated by the position measuring device (100), which are transmitted on signal transmission lines (A, B) to an evaluating unit (4) and the switching between the different kinds of output signal is effected through one or more switching signals (12) transmitted from the side of the evaluating unit (4), **characterized in that** the transmission of the at least one switching signal (12) is effected on the supply line (13) over which the position measuring device (100) is connected to a current and voltage supply unit (14), which is arranged on the side of the evaluating unit (4) and through which the direct current and direct voltage supply to the position measuring device (100) is effected.

2. A method according to claim 1, **characterized in that** analog sensing signals (5, 6) are transmitted as a first kind of output signal and already digitised sensing signals (9, 10) are transmitted in square wave form as a second kind of output signal.

3. A method according to claim 1, **characterized in that** a switching signal (12) with a specific duration and/or a specific frequency is modulated on the side of the evaluating unit (4) on to at least one supply line (13).

4. A method according to claim 3, **characterized in that** identification of the switching signal (12) is effected on the side of the position measuring device by an identification unit (16) which generates a switch signal (18) in accordance with the identified switching signal (12) for switching the kind of output signal which is transmitted.

5. A method according to claim 4, **characterized in that** the switch signal (18) is fed to a switch unit (7) in the position measuring device (100), through which switching between the different kinds of output signal is possible.

6. A method according to claim 1, **characterized in that** a plurality of different switching signals (12) can be transmitted, each of which corresponds to a specific kind of output signal.

7. A method according to claim 1, **characterized in that** a specific switching signal (12) can be transmitted, through which it is possible to switch alternately between two different kinds of output signal.

8. A method according to claim 1, **characterized in that** the different kinds of output signal are each transmitted on the same signal transmission lines (A, B) from the position measuring device (100) to the evaluating unit (4).

9. A method according to claim 1, **characterized in that** a confirmation signal is sent from the position measuring device to the evaluating unit (4) when switching between different kinds of output signal is effected, on the basis of which the evaluating unit (4) recognises the successful switching operation.

10. A method according to claim 1, **characterized in that** at least two kinds of digitalised sensing signals with different signal levels can be transmitted as different kinds of output signal.

11. A method according to claim 10, **characterized in that** different levels of the supply voltage serve as switching signal.

12. Apparatus for switching between different kinds of output signal of a position measuring device (100), wherein at least two different kinds of output signal can be generated by the position measuring device (100), which are transmitted over signal transmission lines (A, B) to an evaluating unit (4), and the switching between the different kinds of output signal is effected through one or more switching signals (12) transmitted from the evaluating unit (4), **characterized in that** the position measuring device (100) and also the evaluating unit (4) are so formed that a transmission of the at least one switching signal (12) is possible over the supply line (13) position measuring device (100), by which the position measuring device (100) is connected to a current and voltage supply unit (14) which is arranged on the side of the evaluating unit (4) and through which the direct current and direct voltage supply of the position measuring device (100) is effected.

13. Apparatus according to claim 12, **characterized in that** the position measuring device (100) comprises a digitising unit (8) through which digitised output signals (9, 10) in square wave form can also be generated from the analog output signals (5, 6).

14. Apparatus according to claim 12, **characterized in that** a switching signal generating unit (15) is arranged on the side of the evaluating unit (4), through which generating unit a switching signal (12) with a specific duration and/or frequency can be modulated on to at least one supply line (13).

15. Apparatus according to claim 14, **characterized in that** the switching signal generating unit (15) comprises a frequency generator.

16. Apparatus according to claim 14, **characterized in that** an identifying unit (16) for identifying the switching signal (12) is arranged on the side of the position measuring device (100), which unit generates a switch signal (18) for switching the transmitted kind of output signal in accordance with the identified switching signal (12).

17. Apparatus according to claim 16, **characterized in that** a switch unit (7) is arranged on the side of the position measuring device (100), to which unit the generated switch signal (18) is fed, through which switching between the different kinds of output signal is possible.

18. Apparatus according to claim 13, **characterized in that** the digitising unit (8) arranged on the side of the position measuring device (100) is so formed that digitised sensing signals with different signal levels can be generated in dependence on the supply voltage level present as switching signal (12).

## Revendications

1. Procédé de commutation entre diverses sortes de signaux de sortie d'un équipement de mesure de position (100) selon lequel le dispositif de mesure de position (100) peut produire au moins deux différentes sortes de signaux de sortie qui sont transmis par des conducteurs de transmission de signal (A, B) à une unité d'évaluation (4), la commutation entre les différentes sortes de signaux étant produite par l'intermédiaire d'un ou plusieurs signaux de commutation (12) provenant de l'unité d'évaluation (4), **caractérisé en ce que** la transmission du signal de commutation (12) au nombre d'un au moins a lieu par le moyen d'un conducteur d'alimentation (13) qui relie l'équipement de mesure de position (100) à une unité d'alimentation en courant (14), disposée du côté de l'unité d'évaluation (4) et qui alimente en intensité et en tension continues l'équipement de mesure de position (100).

2. Procédé selon la revendication 1, **caractérisé en ce que** des signaux d'exploration analogique (5, 6) sont transmis en tant que première sorte de signaux de sortie, tandis qu'en tant que seconde sorte de signaux de sortie sont transmis des signaux d'exploration (5, 10) déjà numérisés sous forme rectangulaire.

3. Procédé selon la revendication 1, caractérisé en ce du côté de l'unité d'évaluation (4), sur au moins un conducteur d'alimentation (13), un signal de commutation (12) est modulé avec une durée définie et/ou une fréquence définie.

4. Procédé selon la revendication 3, **caractérisé en ce que** du côté de l'équipement de mesure est effectuée une identification du signal de commutation (12) par une unité d'identification (16) qui produit, en correspondance avec le signal de commutation (12) issu de l'unité d'évaluation (4), un signal de commutation (18) pour commuter la sorte du signal de sortie transmis.

5. Procédé selon la revendication 4, **caractérisé en ce que** le signal de commutation (13) est adressé à une unité de commutation (17) dans l'équipement de mesure de position (12), qui permet d'effectuer une commutation entre les différentes sortes de signaux de sortie.

6. Procédé selon la revendication 1, **caractérisé en ce que** plusieurs signaux de commutation différents (12) peuvent être transmis, chacun d'eux correspondant à une sorte de signaux de sortie définie.

7. Procédé selon la revendication 1, **caractérisé en ce que** peut être transmis un signal de commutation (12) défini, par lequel peut s'effectuer alternativement la commutation entre deux sortes différentes de signaux de sortie.

8. Procédé selon la revendication 1, **caractérisé en ce que** les différentes sortes de signaux de sortie sont transmises chacune sur le même conducteur de transmission de signaux (A, B), de l'équipement de mesure de position (100) à l'unité d'évaluation (4).

9. Procédé selon la revendication 1, **caractérisé en ce que**, une fois la commutation réalisée entre différentes sortes de signaux de sortie, l'équipement de mesure de position envoie à l'unité d'évaluation (4) un signal de confirmation par lequel l'unité d'évaluation (4) est informée que l'opération de commutation a eu lieu.

10. Procédé selon la revendication 1, **caractérisé en ce que**, en tant que sortes de signaux de sortie différentes, au moins deux sortes de signaux d'exploration numérisés peuvent être transmises avec des niveaux différents.

11. Procédé selon la revendication 10, **caractérisé en ce que** des niveaux différents de la tension d'alimentation servent de signal de commutation.

12. Dispositif de commutation entre diverses sortes de signaux de sortie d'un équipement de mesure de position (100) selon lequel le dispositif de mesure de position (100) peut produire au moins deux différentes sortes de signaux de sortie qui sont transmis par des conducteurs de transmission de signal (A, B) à une unité d'évaluation (4), la commutation entre les différentes sortes de signaux étant produite par l'intermédiaire d'un ou plusieurs signaux de commutation (12) provenant de l'unité d'évaluation (4), **caractérisé en ce que** l'équipement de mesure de position (100) ainsi que l'unité d'évaluation (4) sont constitués de manière à permettre la transmission d'un signal de commutation (12) au nombre d'un au moins, par le conducteur d'alimentation (13) de l'équipement de mesure de position (100), et pour cela cet équipement (100) est relié à une unité d'alimentation en courant (14) qui assure son alimentation en intensité et en tension continues.

13. Dispositif de commutation selon la revendication 12, **caractérisé en ce que** l'équipement de mesure de position (100) comprend une unité de numérisation (8) permettant de produire à partir des signaux analogiques de sortie (5, 6), également des signaux de sortie (9, 10) numérisés sous forme rectangulaire.

14. Dispositif de commutation selon la revendication 12, **caractérisé en ce que** du côté de l'unité de valorisation (4) se trouve une unité (15) de production de signaux de commutation par laquelle un signal de commutation (12) porté par au moins un conducteur d'alimentation (13) peut être modulé avec une durée définie et/ou une fréquence définie.

15. Dispositif selon la revendication 14, **caractérisé en ce que** l'unité de production (15) de signaux de commutation comprend un générateur de fréquence.

16. Dispositif selon la revendication 14, **caractérisé en ce que** pour identifier le signal de commutation (12), du côté de l'équipement de mesure de position (100) est disposée une unité d'identification (16) qui en correspondance avec le signal de commutation (12) identifié, produit un signal de commutation (18) pour commuter la sorte des signaux de sortie transmis.

17. Dispositif selon la revendication 16, **caractérisé en ce que**, du côté de l'équipement de mesure de position (100) est disposée une unité de commutation (7) à laquelle est envoyé le signal de commutation (18) produit permettant d'effectuer la commutation entre les différentes sortes de signaux de sortie.

18. Dispositif selon la revendication 13, **caractérisé en ce que** l'unité de numérisation (8) située du côté de l'équipement de mesure de position (100) est constituée de manière qu'en fonction du niveau de tension d'alimentation présent en tant que signal de commutation (12), des signaux d'exploration numérisés peuvent être produits avec des niveaux de signaux différents.
